# EUROPÄISCHE PATENTANMELDUNG

(11) **EP 0 699 623 A1**
(43) Veröffentlichungstag der Anmeldung: **06.03.1996**
(21) Anmeldenummer: 95109333.5
(22) Anmeldetag: 16.06.1995
(51) Int. Cl.: B67D 5/33

(54) **Lager- bzw. Transportbehälter mit einem programmierbaren Datenträger**

(30) Priorität: 09.07.1994 DE 9411170 U
(71) Anmelder: RIEDEL-DE HAEN AKTIENGESELLSCHAFT, D-30926 Seelze (DE)
(72) Erfinder: Sievert, Wolfgang, Dr., D-31515 Wunstorf (DE)
(74) Vertreter: Muley, Ralf, Dr.

(57) **Zusammenfassung**

Einen Lager- bzw. Transportbehälter (1) für Füllgut, ist mit einem mit produktspezifischen Daten programmierbaren Datenträger (2) untrennbar verbunden, und er ist nur dann befüllbar bzw. entleerbar, wenn die Daten des Datenträgers (2) mit vorgegebenen Daten identisch sind.

## Beschreibung

Das vorliegende Gebrauchsmuster betrifft einen Lager- bzw. Transportbehälter für Füllgut, der mit einem Datenträger ausgerüstet ist und nur unter bestimmten Bedingungen befüllbar bzw. entleerbar ist.

Lager- bzw. Transportbehälter der verschiedensten Art werden im industriellen Alltag in großer Zahl mit allen Arten von Füllgut befüllt bzw. beim Verbraucher wieder entleert. Es ist dabei in der Regel genauestens darauf zu achten, daß die Behälter mit dem richtigen, d.h. mit dem auf dem Behälter angegebenen Füllstoff befüllt werden bzw. daß der richtige Behälter entleert, d.h. beispielsweise die richtige Chemikalie einem Produktionsprozeß zugeführt wird. So kann die versehentliche Zugabe einer falschen Chemikalie den Produktionsansatz unbrauchbar machen und im schlimmsten Fall sogar katastrophale Folgen nach sich ziehen.

Es sind bereits Sicherheitssysteme bekannt, die die genannten Fehler verhindern sollen. Meistens handelt es sich dabei um rein mechanisch arbeitende Schlüsselsysteme bzw. Codierstifte, die aber nicht immer untrennbar mit dem Behälter verbunden sind und leicht umgangen werden können.

Besondere Probleme ergeben sich darüberhinaus bei Behältern für hochreines Füllgut, beispielsweise hochreine Naßprozeßchemikalien, wie sie üblicherweise bei der Herstellung von Halbleiterbauelementen eingesetzt werden.

Die extremen Reinheitsanforderungen an solche Flüssigmedien haben zu einer speziellen Art der Logistik geführt. So werden beispielsweise die hochreinen Flüssigmedien in geschlossenen Systemen produziert und unter Reinraumbedingungen in geeigneten Abfüllanlagen abgefüllt. Beim Verbraucher erfolgt dann die Entnahme der Flüssigmedien aus den Transportbehältern ebenfalls wieder unter Reinraumbedingungen in speziellen Entnahmekabinetts, an die die Transportbehälter unter Vermeidung jeglicher Kontamination angeschlossen werden müssen.

An solche Behälter werden besondere Anforderungen in bezug auf die Qualitätserhaltung des Inhalts gestellt. Aufbau und Formgebung sowie Werkstoffauswahl entsprechen den Anforderungen nach minimaler Kontamination durch gelöste (ionische und nichtionische) sowie ungelöste (partikuläre) Verunreinigungen. Als besonders kritischer Bereich ist der Anschlußbereich anzusehen, der zum Zwecke der Befüllung bzw. Entleerung der Behälter geöffnet werden muß. In der Praxis hat sich sowohl für das Befüllen als auch für das Entleeren der Behälter das feste Anschließen der Verschlußorgane an entsprechend ausgeführte Zuleitungen oder Ableitungen bewährt.

Nachteilig ist, daß die Anschlußsysteme, die ein optimales Verhalten im Hinblick auf Kontaminationsfreiheit bieten, starke Einschränkungen bezüglich einer ebenfalls geforderten Sicherheitscodierung zeigen. Mechanische Sperren, wie Codierstifte, die in entsprechend ausgeformte Gegenstücke greifen, sind chemikalienspezifisch zugeordnet und sollen den Anschluß falscher Behälter an die Befüll- bzw. Entleerungsstationen unmöglich machen. Diese z.T. kompliziert aufgebauten mechanischen Verriegelungen müssen jedoch als zusätzliche Kontaminationsquellen gelten und sind als Risikofaktoren für die Medienreinheit abzulehnen.

Die Kombination einer wirksamen Sicherheitscodierung bei gleichzeitiger Aufrechterhaltung der chemischen und partikulären Reinheit des hochreinen Füllgutes ist also eine grundlegene Forderung des betroffenen Kundenkreises.

Es wurde nun überraschenderweise gefunden, daß die geschilderten Probleme durch den Einsatz programmierbarer Datenträger gelöst werden können.

Das vorliegende Gebrauchsmuster betrifft somit einen Lager- bzw. Transportbehälter für Füllgut, dadurch gekennzeichnet, daß er mit einem mit produktspezifischen Daten programmierbaren Datenträger untrennbar verbunden ist, und nur dann befüllbar bzw. entleerbar ist, wenn die Daten des Datenträgers mit vorgegebenen Daten identisch sind.

Prinzipiell können alle Datenträger eingesetzt werden, die mittels eines Schreibsystems programmiert, d.h. beschrieben und deren Daten mittels eines Lesesystems identifiziert werden können. Bevorzugte Datenträger können berührungslos beschrieben bzw. gelesen werden und dies besonders bevorzugt dynamisch, d.h. "im Vorbeifahren". Bevorzugte Datenträger benötigen darüberhinaus weder beim Programmieren oder Lesen noch für den Datenerhalt eine eigene Stromversorgung. Datenträger, die diese bevorzugten Eigenschaften aufweisen, sind bereits bekannt und beispielsweise als sogenannte Programmable Identification Tags (PIT) im Handel. Solche PITs bestehen nur aus Chip, Spule und gegebenenfalls einem Kondensator zur Resonanzabstimmung, sind also einfach und preiswert aufgebaut. In der Regel haben sie eine Speichergröße zwischen 128 Byte und 1 kByte.

Der Datenträger wird mit produktspezifischen Daten programmiert und auf dem Behälter unlösbar befestigt. Es ist bevorzugt, die mit diesen Daten zu vergleichenden vorgegebenen Daten auf dem Lesegerät zu speichern, so daß unmittelbar ein Datenvergleich stattfinden kann.

Die Ventile der Füll- bzw. Entnahmevorrichtung des erfindungsgemäßen Behälters und/oder der Füll- bzw. Versorgungsstation werden nur dann geöffnet, wenn Datenidentität besteht.

Besteht keine Identität, bleiben die Ventile geschlossen, so daß ein versehentliches Befüllen oder Entleeren ausgeschlossen ist. Es ist dabei vorteilhaft, das Lesegerät und/oder den Behälter mit einer optischen und/oder akustischen Warneinrichtung auszurüsten, die bei Nichtidentität der Daten aktiviert wird. Auf diese Weise kann bereits das Anschließen des Zu- bzw. Ableitesystems an den Behälter vermieden werden.

Der Datenträger kann an jeder beliebigen Stelle des Behälters befestigt werden, an der er gegen mechanische Beschädigungen oder andere äußere Einflüsse wie beispielsweise aggressive Chemikalien geschützt ist bzw. geschützt werden kann und an der er mit dem Lesegerät erreichbar ist.

Es ist besonders bevorzugt, das Lesegerät mit dem Zu-bzw. Ableitesystem der Füll- bzw. Versorgungsstation zu verbinden und den Datenträger in der Nähe der Befüll-bzw. Entnahmevorrichtung des Behälters zu befestigen. Auf diese Weise werden die Daten bei Annäherung des Zu- bzw. Ableitesystems an den Behälter automatisch gelesen und verglichen.

Im Prinzip können alle Lager- und Transportbehälter, die zur Aufnahme von Füllgut geeignet sind, in der beschriebenen Weise mit einem Datenträger ausgerüstet werden.

Soll hochreines Füllgut, beispielsweise hochreine Naßprozeßchemikalien für die Halbleiterindustrie gelagert bzw. transportiert werden, so sind die speziell für diesen Zweck konstruierten Behälter bzw. Vorrichtungen bevorzugt (siehe z.B. die Deutschen Gebrauchsmuster G 9015191.7, G 8904366.9, G 8812724.9 und G 8705113.3 sowie die DE-A 4006490).

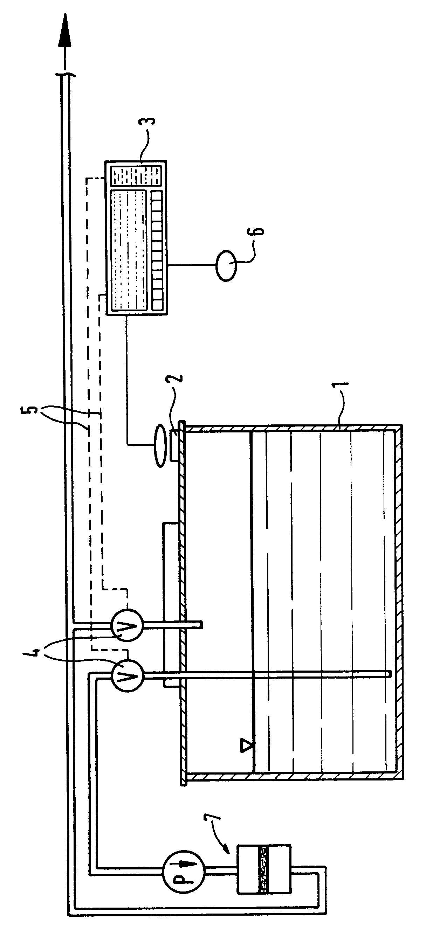

Figur 1 zeigt eine Ausführungsform des erfindungsgemäßen Lager- und Transportbehälters. Der Behälter (1) ist mit einem Datenträger (2) versehen, dessen Daten von einem Lesegerät (3) gelesen und mit vom Lesegerät (3) vorgegebenen Daten verglichen werden. Bei Datenidentität werden die Ventile (4) der Füll- bzw. Versorgungsstation (nicht abgebildet) über eine Ventilsteuerung (5) geöffnet und das Füllgut kann eingefüllt oder entnommen werden. Stimmen die Daten nicht überein, bleiben die Ventile (4) geschlossen und die akustische und optische Warnanlage (6) wird aktiviert. Das abgebildete System ist außerdem mit einem Filtrationskreislauf (7) ausgerüstet.

Die erfindungsgemäßen Lager- und Transportbehälter bieten gegenüber allen derzeit bekannten Systemen erhebliche Vorteile. Eine Verwechslung beim Befüllen oder Entleeren ist bei weitgehender Kontaminationsfreiheit des Systems praktisch ausgeschlossen. Aufgrund seiner Eigenschaften ist er deshalb insbesondere zum Lagern und Transportieren hochreiner Naßprozeßchemikalien für die Halbleiterindustrie geeignet.

Daneben können die erfindungsgemäßen Lager- und Transportbehälter auch für eine automatisierte Materialsteuerung verwendet werden. Auf den Datenträgern können nämlich auch fabrikatorische Einzelheiten wie Artikelnummer, Chargennummer, Kennummer des Behälters und weitere Daten, die für den Materialfluß bzw. die Logistik relevant sind, gespeichert und an ein zentrales Steuersystem weitergegeben werden.

## Patentansprüche

1. Lager- bzw. Transportbehälter (1) für Füllgut, dadurch gekennzeichnet, daß er mit einem mit produktspezifischen Daten programmierbaren Datenträger (2) untrennbar verbunden ist, und nur dann befüllbar bzw. entleerbar ist, wenn die Daten des Datenträgers (2) mit vorgegebenen Daten identisch sind.

2. Lager- bzw. Transportbehälter gemäß Anspruch 1, dadurch gekennzeichnet, daß als Datenträger ein Programmable Identification Tag (PIT) verwendet wird.

3. Lager- bzw. Transportbehälter gemäß Anspruch 1 und/oder 2, dadurch gekennzeichnet, daß die vorgegebenen Daten auf einem Lesegerät (3) gespeichert sind.

4. Lager- bzw. Transportbehälter gemäß Anspruch 3, dadurch gekennzeichnet, daß das Lesegerät und/oder der Behälter mit einer optischen und/oder akustischen Warneinrichtung ausgerüstet ist, die bei Nichtidentität der Daten aktiviert wird.

5. Lager- bzw. Transportbehälter gemäß Anspruch 3 und/oder 4, dadurch gekennzeichnet, daß das Lesegerät mit dem Zu- bzw. Ableitesystem der Füll- bzw. Versorgungsstation verbunden und der Datenträger in der Nähe der Befüll- bzw. Entnahmevorrichtung des Behälters befestigt ist.
